Europäisches Patentamt

European Patent Office

Office européen des brevets

(19)

(11) **EP 1 217 486 A1**

(12) **EUROPÄISCHE PATENTANMELDUNG**

(43) Veröffentlichungstag:
26.06.2002 Patentblatt 2002/26

(51) Int Cl.⁷: **G05B 23/02**, G05B 19/4065

(21) Anmeldenummer: 00811221.1

(22) Anmeldetag: 21.12.2000

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ABB Schweiz AG**
**5400 Baden (CH)**

(72) Erfinder:
• **Bertsch, Joachim**
  **5405 Baden-Dättwil (CH)**
• **Werner, Thomas**
  **5404 Dättwil (CH)**

(74) Vertreter: **ABB Patent Attorneys**
**c/o ABB Schweiz AG**
**Brown Boveri Strasse 6**
**5400 Baden (CH)**

(54) **Verfahren zur Unterhaltsplanung von technischen Einrichtungen**

(57)    In einem Verfahren und System zur Unterhaltsplanung einer technischen Einrichtung wird je ein Statuswert zur Charakterisierung eines Zustands einer technischen Einheit verwendet. Ein Zustand einer übergeordneten Einheit, welche mehrere Untereinheiten mit je zugeordneten Statuswerten aufweist, wird durch einen gemeinsamen Statuswert charakterisiert, der als gewichtete Summe der Statuswerte der mehreren Untereinheiten berechnet wird. Der gemeinsame Statuswert wird zur Planung von Unterhaltsarbeiten an der

Einrichtung verwendet.

In einer bevorzugten Ausführungsform der Erfindung liegt ein Wichtigkeitswert der übergeordneten Einheit vor und wird zusammen mit einem zugeordneten gemeinsamen Statuswert weiterverarbeitet, vorzugsweise in einer gemeinsamen visuellen Darstellung und/oder einer rechnerische Kombination.

In einer weiteren bevorzugten Ausführungsform der Erfindung wird eine zeitliche Änderung von Statuswerten bestimmt und zur Voraussage einer zukünftigen Entwicklung von Statuswerten verwendet.

Fig. 1

EP 1 217 486 A1

## Beschreibung

### Technisches Gebiet

Die Erfindung bezieht sich auf das Gebiet der Unterhaltsplanung von technischen Einrichtungen, insbesondere von elektrischen Schaltanlagen. Sie bezieht sich auf ein Verfahren, ein System und ein Computerprogrammprodukt zur Unterhaltsplanung von technischen Einrichtungen gemäss dem Oberbegriff der Patentansprüche 1, 9 und 10.

### Stand der Technik

Eine derartiges Verfahren ist beispielsweise aus US 5,132,920 bekannt. Dabei werden Sensordaten erfasst und mittels eines Expertensystems Fehlfunktionen von Komponenten eines Kraftwerks diagnostiziert. Zu einer Fehlfunktion werden mittels des Expertensystems je ein Schweregrad und eine Wichtigkeit ermittelt und werden Fehlfunktionen gemäss einer Priorität einer erforderlichen Reparatur geordnet. Das Expertensystem weist eine Regelbasis mit einer Vielzahl von logischen Regeln der Art "Wenn Symptom X auftaucht und der Wert der Messgrösse Y grösser als 0.1 ist, dann ist mit einer Konfidenz von 0.8 die Hypothese Z korrekt" auf. Weitere Regeln ziehen beispielsweise Schlussfolgerungen aus der "Hypothese Z" und weiteren Informationen. Das Expertensystem weist ferner eine sogenannte Inferenzmaschine auf, welche mit Methoden der künstlichen Intelligenz versucht, anhand der Regeln aus vorliegenden Messdaten Schlussfolgerungen für die Wartung zu ziehen.

Das Verfahren erfordert somit eine komplexe Regelbasis und dadurch einen grossen manuellen Aufwand bei der Programmierung sowie einen grossen Rechenaufwand im Betrieb. Auch bei einer Erweiterung einer Anwendung des Verfahrens von beispielsweise einem Teil einer Anlage auf die ganze Anlage ist ein grosser Aufwand erforderlich, da die Verknüpfungen in den Regeln eng mit der Anlagenstruktur zusammenhängen. Das System erfasst nur Fehlfunktionen und erfasst dadurch eine kontinuierliche Verschlechterung eines Geräte- respektive Anlagenzustands nicht.

### Darstellung der Erfindung

Es ist deshalb Aufgabe der Erfindung, ein Verfahren, ein System und ein Computerprogrammprodukt zur Unterhaltsplanung von technischen Einrichtungen der eingangs genannten Art zu schaffen, die einfach zu programmieren und zu betreiben sind, und die auch im fehlerfreien Betrieb der Einrichtung Informationen über einen Zustand der Einrichtung im Hinblick auf die Unterhaltsplanung liefern, und die auf einfache Weise auf eine Hierarchie von Einheiten der Einrichtung anwendbar sind.

Eine weitere Aufgabe der Erfindung ist, ein Verfahren, ein System und ein Computerprogrammprodukt zur Unterhaltsplanung von technischen Einrichtungen der eingangs genannten Art zu schaffen, die auf einfache Weise eine Aussage über eine zukünftige Entwicklung eines Anlagenzustands in Hinblick auf die Unterhaltsplanung liefern.

Diese Aufgaben lösen ein Verfahren, ein System und ein Computerprogrammprodukt zur Unterhaltsplanung von technischen Einrichtungen mit den Merkmalen der Patentansprüche 1, 9 und 10.

Im erfindungsgemässen Verfahren und System wird je ein Statuswert zur Charakterisierung eines Zustands einer technischen Einheit verwendet, wobei ein Zustand einer übergeordneten Einheit, welche mehrere Untereinheiten mit je zugeordneten Statuswerten aufweist, durch einen gemeinsamen Statuswert charakterisiert wird, der als gewichtete Summe der Statuswerte der mehreren Untereinheiten berechnet wird. Der gemeinsame Statuswert wird zur Planung von Unterhaltsarbeiten an der Einrichtung verwendet.

Dadurch wird es möglich, Statuswerte durch eine Hierarchie von Einheiten miteinander zu kombinieren und Statuswerte übergeordneter Einheiten in einfacher Weise aus Statuswerten von Untereinheiten zu bestimmen. Ein entsprechendes Computerprogramm ist mit geringem Aufwand erstellbar und erfordert keine hohe Rechenleistung, so dass das erfindungsgemässe Verfahren auf bestehenden Leittechnikcomputern ohne zusätzliche Hardwareerfordernisse ausführbar ist.

In einer bevorzugten Ausführungsform der Erfindung ist jeder Einheit je ein Wichtigkeitswert zugeordnet und wird mindestens ein gemeinsamer Statuswert mit einem je zugeordneten Wichtigkeitswert kombiniert respektive zusammen weiterverarbeitet, vorzugsweise in einer gemeinsamen visuellen Darstellung und/oder einer rechnerischen Kombination.

In einer bevorzugten Ausführungsform der Erfindung wird eine Änderung eines Statuswertes innerhalb eines vorgegebenen Zeitraumes bestimmt und zur Planung von Unterhaltsarbeiten an der Einrichtung verwendet. Dadurch lassen sich Einheiten, welche hohen Belastungen unterliegen, ermitteln und es lässt sich auf einfache Weise eine Voraussage über eine zukünftige Entwicklung des Statuswertes erzeugen.

Weitere bevorzugte Ausführungsformen gehen aus den abhängigen Patentansprüchen hervor.

**Kurze Beschreibung der Zeichnungen**

Im folgenden wird der Erfindungsgegenstand anhand von bevorzugten Ausführungsbeispielen, welche in den beiliegenden Zeichnungen dargestellt sind, näher erläutert. Es zeigen:

| Figur 1 | schematisch eine Gerätestruktur und einen Informationsfluss gemäss der Erfindung; |
| Figur 2 | eine visuelle Darstellung von Status- und Wichtigkeitswerten gemäss der Erfindung; und |
| Figuren 3 und 4 | unterschiedliche Grenzkurven zur Beurteilung eines Zustandes von technischen Einheiten gemäss der Erfindung. |

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

**Wege zur Ausführung der Erfindung**

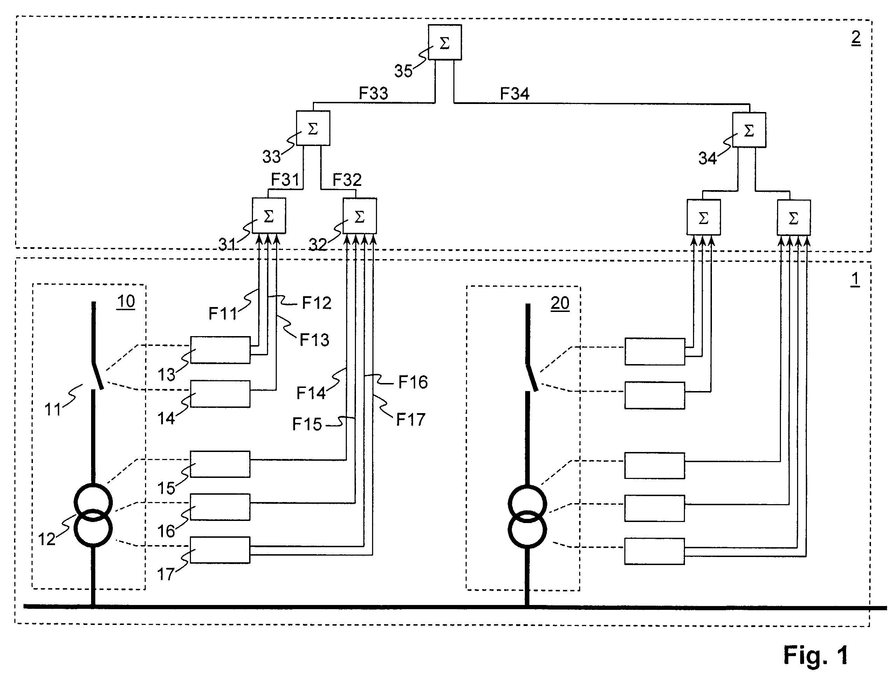

Die Figur 1 zeigt schematisch eine Gerätestruktur eines Teils einer elektrischen Schaltanlage und einen Informationsfluss gemäss der Erfindung. Die Schaltanlage weist Primärgeräte auf, welche den eigentlichen Anlagenzweck erfüllen, wie beispielsweise Schalter, Antriebe, Generatoren oder Transformatoren. Diese werden durch Sekundär- oder Leittechnikgeräte gesteuert, geregelt, überwacht und geschützt. Ein Feld 1 einer elektrischen Schaltanlage umfasst mehrere Abgänge 10,20, welche wiederum Geräte wie einen Schalter 11 und einen Transformator 12 aufweisen. Jedem Gerät 11,12 eines ersten Abgangs 10 ist je mindestens ein Überwachungs- oder Steuergerät, im folgenden Feldgerät 13...17 genannt, zugeordnet. Die Feldgeräte 13...17 sind zur Übermittlung von Zustandswerten F11...F18 an eine erste und zweite Summationseinheit 31,32 ausgebildet, welche wiederum zur Übermittlung von Statuswerten F31,F32 an eine dritte Summationseinheit 33 ausgebildet sind. Die dritte Summationseinheit 33 sowie eine vierte Summationseinheit 34, welche einem zweiten Abgang 20 in analoger Weise zugeordnet ist, sind zur Übermittlung von Statuswerten F33,F34 an eine fünfte Summationseinheit 35 ausgebildet. Die Summationseinheiten 31,32,33,34,35 sind vorzugsweise in einem Stationsleitsystem 2 der Schaltanlage auf einem Leitrechner oder über mehrere Leitrechner verteilt implementiert.

Die Erfindung funktioniert wie folgt: Die Zustandswerte F11...F18 repräsentieren je einzelne aktuelle Charakteristiken der Geräte des ersten Abgangs 10. Die Charakteristiken ändern sich mit der Zeit und je nachdem, wie die Geräte betrieben werden. Die Charakteristiken werden wiederholt gemessen oder anhand von Messungen berechnet oder geschätzt. Diese Berechnung respektive Schätzung geschieht in den Feldgeräten 13...17 oder aber, alternativ zur Darstellung von Figur 1, in dem übergeordneten Stationsleitsystem 2. Ein Feldgerät 13...17 bestimmt je einen oder mehrere Zustandswerte F11...F18. Jeder der Zustandswerte F11...F18 ist eine reellwertige Zahl, die auf einen vorgegebenen Wertebereich normiert ist. Der Wertebereich liegt zwischen einem vorgegebenen Minimal- und Maximalwert, beispielsweise zwischen 0 und 1 oder zwischen 0 und 100. In einem Normalbetrieb der Schaltanlage verringern sich die Zustandswerte F11...F18 mit der Zeit. Hat ein Zustandswert F11...F18 den Maximalwert, so entspricht dies einem optimalen Zustand des Gerätes im Hinblick auf diesen Zustand. Hat ein Zustandswert F11...F18 den Minimalwert, so ist ein Unterhalt des Gerätes im Hinblick auf diesen Zustand notwendig, unabhängig von anderen Zuständen oder Gegebenheiten.

Zustandswerte F11...F18 für Geräte einer Schaltanlage repräsentieren beispielsweise:

- Falls Transformatorenöl gelöstes Gas enthält, verschlechtert sich Isolationseigenschaften des Öls. Ein sogenannter "Dissolved Gas Analysis"-Wert (DGA) bezeichnet eine Menge von gelöstem Gas in ppm ("parts per million"). Eine Erhöhung des DGA um mehr als 16ppm pro Monat während eines Tages reduziert einen entsprechenden Zustandswert um 5% des Maximalwertes. Eine Erhöhung des DGA um mehr als 20ppm pro Monat während eines Tages reduziert den Zustandswert um 10%.
- Beträgt ein Wirkungsgrad einer Kühlung eines Transformators weniger als 80%, so wird ein entsprechender Zustandswert täglich um 1% des Maximalwertes reduziert. Somit ist nach mindestens 100 Tagen ein Unterhalt dieser Kühlung notwendig. Da eine reduzierte Kühlungseffizienz den Betrieb des Transformators nicht unmittelbar beeinflusst, erhält der entsprechende Zustandswert in der weiteren Verarbeitung eine relativ kleine Gewichtung.
- Wird der Transformator mit Überlast betrieben, so wird ein entsprechender Zustandswert entsprechend einer Höhe und Dauer der Überlast reduziert. Eine numerische Bestimmung dieser Zusammenhänge richtet sich nach Unterhaltsvorschriften eines Anlagenbetreibers.
- Eine beliebiges Gerät weist einen Zustandswert auf, der entsprechend einer Zeitdauer seit der letzten Revision oder Kontrolle des Gerätes reduziert wird, wiederum entsprechend vorgegebenen Unterhaltsvorschriften.
- Weitere Zustandswerte charakterisieren beispielsweise bisherige gute oder schlechte Erfahrungen mit einem Gerät oder manuell erfasste Informationen über ein Gerät.

Erfindungsgemäss wird in der ersten Summationseinheit 31 ein Statuswert des Schalters 11 oder erster Statuswert F31 als gewichtete Summe der Zustandswerte F11,F12,F13, welche dem Schalter 11 zugeordnet sind, berechnet. Dazu ist jedem der Zustandswerte F11,F12,F13 ein Gewichtungsfaktor W11,W12,W13 zugeordnet. Ein Gewichtungsfaktor Wi bestimmt, wie sehr eine Änderung eines Statuswertes Fi einer Einheit zu einer Änderung des Statuswertes der übergeordneten Einheit beiträgt. Somit beträgt der Statuswert F31 des Schalters 11

$$F31 = \frac{W11 \cdot F11 + W12 \cdot F12 + W13 \cdot F13}{W11 + W12 + W13}$$

Im allgemeinen beträgt ein gemeinsamer Statuswert Fk einer übergeordneten Einheit, welche n Einheiten mit jeweiligen Statuswerten Fi = {F1, F2,...Fn} und zugeordneten Gewichtungsfaktoren Wi = {W1, W2, ...Wn} aufweist,

$$Fk = \frac{\sum_{i=1}^{n}(Wi \cdot Fi)}{\sum_{i=1}^{n} Wi}$$

Das heisst, dass der gemeinsame Statuswert Fk der übergeordneten Einheit gleich der Summe der mit den jeweiligen Gewichtungsfaktoren Wi gewichteten Statuswerte Fi der untergeordneten Einheiten ist, dividiert durch die Summe der Gewichtungsfaktoren Wi. Durch die Division durch die Summe der Gewichtungsfaktoren Wi wird der Wertebereich des Statuswertes skaliert und ist gleich dem gemeinsamen Wertebereich der Zustandswerte. Alternativ dazu werden skalierte Gewichtungsfaktoren Wi' verwendet, wobei

$$Wi' = \frac{Wi}{\sum_{i=1}^{n} Wi}$$

so dass

$$Fk = \sum_{i=1}^{n}(Wi' \cdot Fi).$$

Der Statuswert F31 des Schalters 11 fasst Zustandsinformationen aus verschiedenen Quellen zu einem einzigen Wert zusammen. Dieser Wert charakterisiert den Zustand des Schalters 11 als Ganzem, wobei Betriebs- und Unterhaltsvorschriften des Anlagenbetreibers durch die Gewichtungsfaktoren Wi und durch die Vorschriften zur Bestimmung der Zustandswerte F11...F18 berücksichtigt sind. Wie für die einzelnen Zustände gilt auch für den Schalter 11, dass sein Statuswert F31 im optimalen Zustand gleich dem Maximalwert ist und sich mit der Zeit verringert.
Ein zweiter Statuswert F32 des Transformators 12 wird in analoger Weise in der zweiten Summationseinheit 32 aus entsprechenden Zustandswerten F14...F18 des Transformators 12 berechnet.
Dadurch dass Statuswerte auf einen gemeinsamen Wertebereich normiert sind lassen sich Statuswerte mehrerer unterschiedlicher Geräte vergleichen und auch zu Statuswerten von übergeordneten Einheiten kombinieren respektive zu einem gemeinsamen Wert zusammenfassen. Im vorliegenden Beispiel geschieht dies durch Kombination, also durch gewichtete Summation, des ersten Statuswerts F31 mit dem zweiten Statuswert F32 in der dritten Summationseinheit 33. Es resultiert daraus ein dritter Statuswert F33 des ersten Abgangs 10. Dieser wird in einer weiteren Hierarchiestufe mit einem vierten Statuswert F34 des zweiten Abgangs 20 und allenfalls weiteren Statuswerten anderer Teile der Schaltanlage gemäss der Erfindung zu einem fünften Statuswerte F35 der Schaltanlage kombiniert. Statuswerte von mehreren Schaltanlagen sind wiederum zu Statuswerten eines Energieverteilungsnetzes kombinierbar respektive zusammenfassbar.
Die Erfindung hat den Vorteil, dass ein gemeinsames Mass zur Beurteilung eines Zustands einer technischen Einheit auf verschiedenen Hierarchiestufen eines technischen Systems oder einer technischen Einrichtung 1 bestimmt wird. Eine technische Einheit ist dabei ein Aspekt oder eine Komponente eines Gerätes 11,12 oder ein Gerät 11,12 oder ein Abgang 10,20 oder eine Schaltanlage 1 oder ein elektrisches Hoch- oder Mittelspannungsnetz. Auf einer obersten Hierarchiestufe ist eine entsprechende Einheit mit der ganzen Einrichtung selber identisch.

Allgemein gesprochen besteht die Einrichtung aus hierarchisch gegliederten Einheiten, wobei jede Einheit bezüglich einer übergeordneten Einheit eine Untereinheit ist und, mit Ausnahme von Einheiten, welche sich auf einer untersten Hierarchiestufe befinden, bezüglich mehrerer Untereinheiten eine übergeordnete Einheit ist.

Auf jeder Hierarchiestufe fasst ein gemeinsamer Statuswert welcher einer übergeordneten Einheit zugeordnet ist gemäss der Erfindung Statuswerte von mehreren Untereinheiten zusammen. Der erste Abgang 10 ist bezüglich der Geräte 11,12, die er aufweist, eine übergeordnete Einheit, und bezüglich der Schaltanlage 1 eine Untereinheit. Analog dazu ist der dritte Statuswert $F_{33}$ bezüglich des ersten und zweiten Statuswertes $F_{31}, F_{32}$ ein gemeinsamer Statuswert und bezüglich des fünften Statuswertes $F_{35}$ ein Statuswert einer Untereinheit. Die Zustandswerte $F_{11}$... $F_{18}$ werden als Statuswerte von Untereinheiten betrachtet, wobei diese Untereinheiten je einzelnen Komponenten und/oder Aspekten eines Gerätes 11,12 entsprechen. Solche Aspekte sind, beispielsweise bei einem Transformator: Kerntemperatur, Öltemperatur, DGA, Zeitdauer und Intensität einer Überbelastung, etc.

In einer bevorzugten Ausführungsform der Erfindung werden mehrere Statuswerte $F_i$ einem Benutzer angezeigt und/oder in einem automatisierten Verfahren zur Planung von Unterhaltsarbeiten an der Schaltanlage verwendet.

Die Erfindung lässt sich auch gemäss anderen Rechenvorschriften ausführen, die mathematisch äquivalent sind. Beispielsweise werden Gewichtungsfaktoren $W_i$ je für einen bestimmten Zustandswert eines bestimmten Gerätes definiert und anschliessend je mit einem gemeinsamen Gewichtungsfaktor des Gerätes multipliziert.

in einer bevorzugten Ausführungsform der Erfindung wird jeder Einheit je ein Wichtigkeitswert $C_i$ zugeordnet, so dass jede Einheit einen Wichtigkeitswert $C_i$ aufweist. Dadurch, dass der Einheit auch ein Statuswert $F_i$ zugeordnet ist, sind sich auch die entsprechenden Status- und Wichtigkeitswerte $C_i$ zugeordnet. Ein Wichtigkeitswert $C_i$ gibt an, wie wichtig oder wie kritisch die Einheit für das Funktionieren der Anlage respektive der Einrichtung ist. Der Wichtigkeitswert $C_i$ wird in der Regel einmal bestimmt und bleibt im wesentlichen unverändert, solange sich eine Konfiguration der Anlage nicht ändert. Wichtigkeitswerte $C_i$ verschiedener Einheiten sind auf einen gemeinsamen Wertebereich normiert, beispielsweise auf reelle Zahlen zwischen 0 und 1. Dabei entsprechen im vorliegenden Beispiel hohe Werte je einer hohen Wichtigkeit. Der Wichtigkeitswert $C_i$ eines Gerätes ist bevorzugt eine gewichtete Summe von einzelnen Wichtigkeitswerten $C_i$. Einzelne Wichtigkeitswerte $C_i$ werden zum Beispiel bestimmt anhand von:

- Zu erwartende Kosten beim Ausfall des Gerätes, beispielsweise aufgrund von Produktionsverlusten oder Lieferverträgen mit Strafzahlungen bei Nichteinhaltung.
- Redundanz, welche ausdrückt, ob eine Umschaltung auf ein redundantes Gerät möglich ist.
- Einer zur Umschaltung benötigten Zeitdauer.
- Zuverlässigkeit der Umschaltung.
- Wichtigkeit des Gerätes in der Anlage. Beispielsweise wird ein Haupttransformator eines Kraftwerkes wesentlich höher bewertet als ein Abgangsschalter zu einem Wohnquartier.

Je nach Politik und Prioritäten eines Unternehmens werden Gewichtungen der Wichtigkeitswerte anders gewählt, beispielsweise um entweder eine Betriebssicherheit zu maximieren oder um Unterhaltskosten zu minimieren.

In einer bevorzugten Ausführungsform der Erfindung wird eine visuelle Darstellung erzeugt, welche einen Statuswert der übergeordneten Einheit zusammen mit dem Wichtigkeitswert einem Benutzer anzeigt.

Bevorzugt wird in der visuellen Darstellung mit einer ersten und einer zweiten Koordinatenrichtung eine Markierung dargestellt, welche einer Einheit zugeordnet ist, wobei eine Position der Markierung in der ersten Koordinatenrichtung nach Massgabe des Statuswerts $F_i$ der Einheit bestimmt wird, und eine Position der Markierung in der zweiten Koordinatenrichtung nach Massgabe des Wichtigkeitswerts $C_i$ der Einheit bestimmt wird.

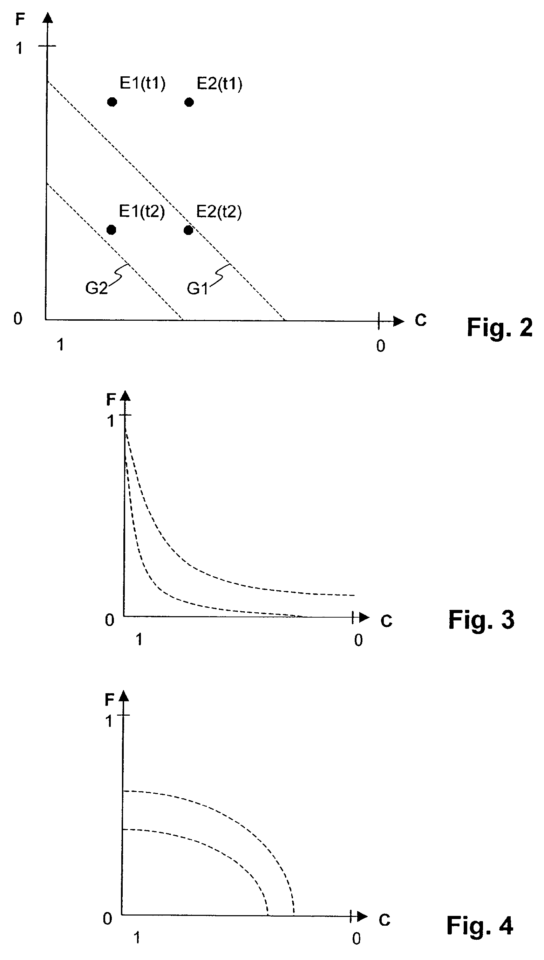

Figur 2 zeigt eine Beispiel für eine visuelle Darstellung von Status- und Wichtigkeitswerten gemäss der Erfindung. Darin sind entlang einer horizontalen Achse C Wichtigkeitswerte $C_i$ aufgetragen, wobei sich ein Punkt mit abnehmender Wichtigkeit nach rechts verschiebt. Entlang einer vertikalen Achse F sind Statuswerte $F_i$ aufgetragen, wobei sich ein Punkt mit abnehmendem Statuswert nach unten verschiebt. Zwei Punkte mit Markierungen E1(t1) und E2(t2) beschreiben je eine erste und eine zweite Einheit, beispielsweise zwei Abgänge einer Schaltanlage, zu einem Zeitpunkt t1. Beide Einheiten weisen einen gleich bewerteten Status $F_i$ auf. Die erste Einheit weist jedoch eine höhere Wichtigkeit $C_i$ als die zweite Einheit auf.

Die Darstellung weist vorzugsweise mindestens eine Grenzkurve auf, welche die Darstellung in mehrere Gebiete unterteilen, die unterschiedlichen Unterhaltsprioritäten entsprechen: In der Darstellung gemäss Figur 2 zeigt eine erste Grenzkurve G1 an, dass eine Wartung empfohlen ist, falls eine Markierung diese Grenzkurve G1 überschreitet. Eine zweite Grenzkurve G2 zeigt an, dass eine Wartung zwingend erfolgen muss.

Nach einer bestimmten Zeit, beispielsweise nach mehreren Tagen, Monaten oder Jahren haben sich die Punkte zu den Markierungen E1(t2) und E2(t2) verschoben. Entsprechend der Lage der Markierungen bezüglich der Grenzkurven G1,G2 ist sichtbar, dass für beide Einrichtungen eine Wartung empfohlen ist. Vorzugsweise wird zur Beurteilung einer Dringlichkeit der Wartung ein Abstand je einer Markierung E1(t1), E2(t1), E1(t2), E2(t2) zu einer Grenzkurve G1,G2 berechnet. Je geringer dieser Abstand ist, desto höher ist die Dringlichkeit. Dementsprechend liegt für die erste Einheit eine höhere Dringlichkeit als für die zweite vor.

Durch die erfindungsgemässe Darstellung lassen sich verschiedenartige technische Einheiten mit unterschiedlichen Wichtigkeit zueinander in Bezug setzen und wird eine übergreifende Unterhaltsplanung unterstützt.

In einer weiteren Ausführungsform der Erfindung geschieht die Unterhaltsplanung für eine Einrichtung respektive für eine Einheit der Einrichtung nach Massgabe von mindestens einem zugeordneten Statuswert Fi und einem zugeordneten Wichtigkeitswert Ci. Vorzugsweise wird dabei, analog zur oben geschilderten Beurteilung anhand der graphischen Darstellung, die Unterhaltsplanung für die Einrichtung bezüglich einer vorgegebenen Einheit nach Massgabe einer Distanz eines Punktes (E1(t1), E2(t1), E1(t2), E2(t2) in einem zweidimensionalen Raum von einer Grenzkurve G1, G2 vorgenommen. Dabei wird eine Lage des Punktes in einer ersten Dimension durch den Statuswert Fi der Einheit bestimmt und wird eine Lage des Punktes in einer zweiten Dimension durch den Wichtigkeitswert Ci der Einheit bestimmt.

In einer weiteren Ausführungsform der Erfindung sind die Grenzkurven hyperbelähnlich, wie in Figur 3 gezeigt, oder ellipsenähnlich, wie in Figur 4 gezeigt.

Ein erfindungsgemässes System weist Mittel zur Bestimmung eines Statuswertes einer übergeordneten Einheit als eine gewichtete Summe von Statuswerten der Untereinheiten dieser übergeordneten Einheit auf, wobei der gemeinsame Statuswert zur Planung von Unterhaltsarbeiten an der Einrichtung verwendbar ist.

Ein erfindungsgemässes Computerprogrammprodukt zur Unterhaltsplanung von technischen Einrichtungen weist einen maschinenlesbarem Träger auf, auf welchem ein Programmcode gespeichert ist, der in einen Computer ladbar ist und bei der Ausführung auf einem Computer das erfindungsgemässe Verfahren ausführt.

In einer weiteren bevorzugten Ausführungsform der Erfindung wird ein differentieller Statuswert dF als Änderung eines Statuswertes Fi über einer vorgegebenen Zeitdauer dT bestimmt:

$$dF = \left( \frac{\sum\limits_{i=1}^{n}\left(Wi \cdot Fi\right)}{\sum\limits_{i=1}^{n}Wi} \right) \frac{1}{dT}$$

Dabei ist die Zeitdauer dT entsprechend der zugeordneten Einheit bestimmt. Für einzelne Geräte wie Schalter oder Transformatoren beträgt die Zeitdauer dT vorzugsweise annähernd einen Monat. Für umfangreichere Einheiten wie beispielsweise eine oder mehrere Schaltanlagen beträgt sie vorzugsweise annähernd ein Jahr.

Der differentielle Statuswert dF ist ein Mass für einen Verlust an Lebensdauer der zugeordneten Einheit. Beispielsweise zeigt ein Vergleich von differentiellen Statuswerten dF mehrerer Schalter dass ein bestimmter Schalter vergleichsweise schneller altert beziehungsweise revisionsbedürftig wird. Falls dieser Sachverhalt einer bekannten starken Belastung des Schalters entspricht, wird sie unter Umständen in Kauf genommen. Falls jedoch Betriebsbedingungen des Schalters nicht eine solche Alterung erwarten lassen, deutet dies auf eine unbekannte Ursache hin. Der differentielle Statuswert dF liefert somit eine Diagnosemöglichkeit, die auf unbekannte Störeinflüsse hinweist.

Aufgrund des differentiellen Statuswerts dF lässt sich eine Voraussage über eine zukünftige Entwicklung des entsprechenden Statuswertes erzeugen. Damit lässt sich eine verbesserte Unterhaltsplanung erreichen. Weisen beispielsweise zwei Transformatoren einen gleichen Statuswert auf, zeigt aber der differentielle Statuswert dF des einen Transformators eine verstärkte Alterung an, so ist dieser Transformator bevorzugt zu warten. Es kann sogar vorteilhaft sein, eine erste Einheit mit einem momentan höheren, also besseren Status früher als eine zweite Einheit mit schlechterem Status zu warten, falls eine hohe Alterung, also ein hoher differentieller Statuswert dF der ersten Einheit über die nächsten Monate ein Verschlechterung ihres Statuswertes gegenüber der zweiten Einheit erwarten lässt.

Bezugszeichenliste

| | |
|---|---|
| 1 | Schaltanlage, Unterstation |
| 2 | Stationsleitsystem |
| 10 | erster Abgang |
| 20 | zweiter Abgang |

| 11 | Schalter |
|----|----------|
| 12 | Transformator |
| 13...17 | Feldgeräte |
| 31 | erste Summationseinheit |
| 32 | zweite Summationseinheit |
| 33 | dritte Summationseinheit |
| 34 | vierte Summationseinheit |
| 35 | fünfte Summationseinheit |
| F11...F18 | Zustandswerte |
| F31 | erster Statuswert |
| F32 | zweiter Statuswert |
| F33 | dritter Statuswert |
| F34 | vierter Statuswert |
| F35 | fünfter Statuswert |
| Fi | Statuswerte |
| F | vertikale Achse, Statuswertachse |
| C | Horizontale Achse, Wichtigkeitsachse |
| Ci | Wichtigkeitswerte |
| Wi | Gewichtungsfaktoren |
| G1 | erste Grenzkurve |
| G2 | zweite Grenzkurve |
| E1(t1), E2(t1), E1(t2), E2(t2) | Markierungen |
| dT | Zeitdauer |
| dF | differentieller Statuswert |

**Patentansprüche**

1. Verfahren zur Unterhaltsplanung einer technischen Einrichtung, welche aus hierarchisch gegliederten Einheiten (1,10,11,12,20) besteht, wobei jede Einheit bezüglich einer übergeordneten Einheit eine Untereinheit ist und jede Einheit, mit Ausnahme von Einheiten, welche sich auf einer untersten Hierarchiestufe befinden, bezüglich mindestens zweier Untereinheiten eine übergeordnete Einheit ist, und wobei im Verfahren jeder der Einheiten (1,10,11,12,20) je ein Statuswert (Fi) zugeordnet wird, welcher einen Zustand der Einheit charakterisiert, **dadurch gekennzeichnet,**

   **dass** ein Zustand einer übergeordneten Einheit durch einen Statuswert (Fi) charakterisiert wird, der als gewichtete Summe von Statuswerten (Fi) der mindestens zwei Untereinheiten dieser übergeordneten Einheit berechnet wird, und

   **dass** mehrere Statuswerte (Fi) zur Planung von Unterhaltsarbeiten an der Einrichtung verwendet werden.

2. Verfahren gemäss Anspruch 1, **dadurch gekennzeichnet, dass** mehrere Statuswerte (Fi) einem Benutzer angezeigt werden oder in einem automatisierten Verfahren zur Planung von Unterhaltsarbeiten an der Einrichtung verwendet werden .

3. Verfahren gemäss Anspruch 1, **dadurch gekennzeichnet, dass** die Statuswerte (Fi), der verschiedenen Einheiten einen gemeinsamen Wertebereich aufweisen, welcher durch eine Menge von reellen Zahlen zwischen einem vorgegebenen Minimalwert und einem vorgegebenen Maximalwert definiert ist.

4. Verfahren gemäss Anspruch 1, **dadurch gekennzeichnet, dass** jeder Einheit je ein Wichtigkeitswert (Ci) zugeordnet ist und dass eine visuelle Darstellung erzeugt wird, welche für mindestens eine Einheit den zugeordneten Statuswert (Fi) zusammen mit dem zugeordneten Wichtigkeitswert (Ci) einem Benutzer anzeigt.

5. Verfahren gemäss Anspruch 4, **dadurch gekennzeichnet, dass** in der visuellen Darstellung mit einer ersten und einer zweiten Koordinatenrichtung (F,C) eine Markierung (E1(t1), E2(t1), E1(t2), E2(t2)) dargestellt wird, welche der Einheit zugeordnet ist, wobei eine Position der Markierung in der ersten Koordinatenrichtung (F) nach Massgabe des Statuswerts (Fi) der Einheit bestimmt wird, und eine Position der Markierung (E1(t1), E2(t1), E1(t2), E2(t2)) in der zweiten Koordinatenrichtung (C) nach Massgabe des Wichtigkeitswerts (Ci) der Einheit bestimmt wird.

6. Verfahren gemäss Anspruch 1, **dadurch gekennzeichnet, dass** jeder Einheit je ein Wichtigkeitswert (Ci) zugeordnet ist und dass die Unterhaltsplanung für die Einrichtung nach Massgabe von Statuswerten (Fi) und Wichtigkeitswerten (Ci) geschieht, welche mehreren Einheiten der Einrichtung je zugeordnet sind.

7. Verfahren gemäss Anspruch 6, **dadurch gekennzeichnet, dass** die Unterhaltsplanung für die Einrichtung bezüglich einer vorgegebenen Einheit nach Massgabe einer Distanz eines Punktes (E1(t1), E2(t1), E1(t2), E2(t2)) in einem zweidimensionalen Raum von einer Grenzkurve (G1,G2) geschieht, wobei eine Lage des Punktes (E1(t1), E2(t1), E1(t2), E2(t2)) in einer ersten Dimension durch den Statuswert (Fi) der Einheit bestimmt wird, und eine Lage des Punktes (E1(t1), E2(t1), E1(t2), E2(t2)) in einer zweiten Dimension durch den Wichtigkeitswert (Ci) der Einheit bestimmt wird.

8. Verfahren gemäss Anspruch 1, **dadurch gekennzeichnet, dass** eine Änderung (dF) eines Statuswertes (Fi) innerhalb eines vorgegebenen Zeitraumes bestimmt und zur Planung von Unterhaltsarbeiten an der Einrichtung verwendet wird.

9. System zur Unterhaltsplanung einer technischen Einrichtung, welche aus hierarchisch gegliederten Einheiten (1,10,11,12,20) besteht, wobei jede Einheit bezüglich einer übergeordneten Einheit eine Untereinheit ist und jede Einheit, mit Ausnahme von Einheiten, welche sich auf einer untersten Hierarchiestufe befinden, bezüglich mehrerer Untereinheiten eine übergeordnete Einheit ist, und wobei die Einheiten (1,10,11,12,20) je einen Statuswert (Fi) zur Charakterisierung eines Zustands einer Einheit aufweisen, **dadurch gekennzeichnet,**
**dass** das System Mittel zur Bestimmung eines Statuswertes (Fi) einer übergeordneten Einheit als eine gewichtete Summe von Statuswerten (Fi) der mehreren Untereinheiten dieser übergeordneten Einheit aufweist, und
**dass** mehrere Statuswert (Fi) zur Planung von Unterhaltsarbeiten an der Einrichtung verwendbar sind.

10. Computerprogrammprodukt zur Unterhaltsplanung von technischen Einrichtungen, mit einem maschinenlesbaren Träger, auf welchem ein Programmcode gespeichert ist, der in einen Computer ladbar ist und bei Ausführung auf einem Computer das erfindungsgemässe Verfahren ausführt.

**Fig. 1**

EP 1 217 486 A1

**Fig. 2**

**Fig. 3**

**Fig. 4**

**Europäisches Patentamt**

# EUROPÄISCHER RECHERCHENBERICHT

Nummer der Anmeldung

EP 00 81 1221

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | US 5 132 920 A (BELLOWS JAMES C ET AL) 21. Juli 1992 (1992-07-21) * Spalte 3, Zeile 10 - Spalte 11, Zeile 51 * ____ | 1,9 | G05B23/02 G05B19/4065 |
| A | DE 196 49 643 A (SIEMENS AG) 4. Juni 1998 (1998-06-04) * Abbildung 2 * ____ | 1,9 | |
| X | WO 96 08437 A (HUOTARI PETRI ;KONE OY (FI); NIEMINEN JUHA (FI); HEIKKILAE KIMMO () 21. März 1996 (1996-03-21) | 10 | |
| A | * das ganze Dokument * ____ | 1 | |
| X | US 5 969 305 A (GIELIS MICHEL ET AL) 19. Oktober 1999 (1999-10-19) | 10 | |
| A | * das ganze Dokument * ____ | 1 | |
| A | EP 0 612 039 A (HITACHI LTD ;BABCOCK HITACHI KK (JP)) 24. August 1994 (1994-08-24) * das ganze Dokument * _____ | 1 | RECHERCHIERTE SACHGEBIETE (Int.Cl.7) G05B |

Der vorliegende Recherchenbericht wurde für alle Patentansprüche erstellt

| Recherchenort | Abschlußdatum der Recherche | Prüfer |
|---|---|---|
| DEN HAAG | 28. August 2001 | Hauser, L |

EPO FORM 1503 03.82 (P04C03)

**Europäisches**

**Patentamt**

Nummer der Anmeldung

EP 00 81 1221

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vor- liegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vor- liegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches**
**Patentamt**

**MANGELNDE EINHEITLICHKEIT**
**DER ERFINDUNG**
**ERGÄNZUNGSBLATT B**

Nummer der Anmeldung

EP 00 81 1221

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-9

   Verfahren zur Unterhaltsplanung einer Einrichtung die aus hierarchischen Ebenen besteht wobei gewichteten Summen von Status Werten bestimmt werden zur Evaluation des Zustands der Einrichtung

2. Anspruch : 10

   Computerprogrammprodukt zur Unterhaltsplanung von technischen Einrichtungen

## ANHANG ZUM EUROPÄISCHEN RECHERCHENBERICHT
## ÜBER DIE EUROPÄISCHE PATENTANMELDUNG NR.

EP 00 81 1221

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-08-2001

| Im Recherchenbericht angeführtes Patentdokument | Datum der Veröffentlichung | Mitglied(er) der Patentfamilie | | Datum der Veröffentlichung |
|---|---|---|---|---|
| US 5132920 A | 21-07-1992 | CA | 1326555 A | 25-01-1994 |
| | | CN | 1036647 A,B | 25-10-1989 |
| | | ES | 2010403 A | 01-11-1989 |
| | | JP | 2008999 A | 12-01-1990 |
| | | JP | 2824524 B | 11-11-1998 |
| | | KR | 9704261 B | 26-03-1997 |
| DE 19649643 A | 04-06-1998 | KEINE | | |
| WO 9608437 A | 21-03-1996 | FI | 944294 A | 17-03-1996 |
| | | AU | 3389595 A | 29-03-1996 |
| US 5969305 A | 19-10-1999 | AU | 5301098 A | 13-08-1998 |
| | | BR | 9800583 A | 29-06-1999 |
| | | CA | 2228773 A | 10-08-1998 |
| | | CN | 1190642 A | 19-08-1998 |
| | | EP | 0857684 A | 12-08-1998 |
| | | JP | 10218513 A | 18-08-1998 |
| | | NO | 980125 A | 11-08-1998 |
| | | TR | 9800174 A | 23-08-1999 |
| | | ZA | 9800564 A | 30-07-1998 |
| EP 0612039 A | 24-08-1994 | JP | 6242289 A | 02-09-1994 |
| | | JP | 6243119 A | 02-09-1994 |
| | | JP | 6250998 A | 09-09-1994 |
| | | DE | 69421305 D | 02-12-1999 |
| | | DE | 69421305 T | 20-07-2000 |
| | | US | 5648919 A | 15-07-1997 |

EPO FORM P0461

Für nähere Einzelheiten zu diesem Anhang : siehe Amtsblatt des Europäischen Patentamts, Nr.12/82